Europäisches Patentamt

European Patent Office

Office européen des brevets

(19)

(11) Numéro de publication: **0 028 562**
A1

## (12) DEMANDE DE BREVET EUROPEEN

(21) Numéro de dépôt: 80401526.1

(22) Date de dépôt: 28.10.80

(51) Int. Cl.³: **B 01 D 45/10**
B 01 D 47/02

(30) Priorité: 31.10.79 FR 7927009

(43) Date de publication de la demande:
13.05.81 Bulletin 81/19

(84) Etats Contractants Désignés:
DE GB IT

(71) Demandeur: SECEMIA - Société Européenne de
Constructions Electro-Mécaniques Industrielles et
Agricoles Société anonyme
5, avenue du Général de Gaulle
F-60304 Senlis(FR)

(72) Inventeur: Barrois, Jacky
27, rue du Jeu d'Arc
F-60160 Montataire(FR)

(72) Inventeur: Hudon, Michel
Les Volubilis Brichebay
F-60300 Senlis(FR)

(72) Inventeur: Garret, Jean Claude
ST. Nicolas D'Acy
F-60300 Senlis(FR)

(72) Inventeur: Book, Gérard
38, rue du Faubourg St. Martin
F-60300 Senlis(FR)

(74) Mandataire: Pruvost, Marc Henri
Cabinet PRUVOST 31 Bld. Gutenberg
F-93190 Livry-Gargan(FR)

(54) Laveur de gaz.

(57) Ce laveur de gaz comprend des gouttières (12, 13) inclinées sur la verticale, s'étendant entre un bac supérieur (5)
et un bac inférieur (8) et dans lesquelles l'eau ruisselle en continu. Ces gouttières sont disposées en rangées orientées
transversalement au sens d'écoulement des gaz et dans lesquelles les gouttières sont placées en quinconce, afin de constituer des chicanes interposées dans le trajet d'écoulement
des gaz, obligeant ceux-ci à progresser selon un trajet sinueux en abandonnant, au droit de chaque rangée, les particules en suspension à l'eau de ruissellement. Un laveur de
ce type peut être combiné avantageusement à un séchoir à
grain. Dans un tel cas, les gaz abandonnent à l'eau de ruissellement leur chaleur propre ainsi que la chaleur latente
résultant de la condensation de l'humidité qu'ils contiennent.
Les surfaces de ruissellement peuvent également servir de
surfaces d'échange thermique.

EP 0 028 562 A1

./...

FIG. 1

Laveur de gaz.

La présente invention se rapporte d'une façon générale aux laveurs de gaz.

Les laveurs de gaz, aussi dénommés dépoussiéreurs par voie humide, sont des appareils ayant pour but la séparation des particules solides en suspension dans un gaz, en vue de l'épuration de celui-ci.

Plusieurs types de laveurs de gaz sont connus. Selon l'un de ces types, l'appareil comporte des moyens produisant un ou plusieurs rideaux d'eau qui sont traversés par le gaz à épurer. Au moment où ce gaz traverse ce rideau d'eau, les particules solides sont mouillées par l'eau, et ainsi retenues par le liquide. Toutefois, il se produit lors du passage du gaz un entraînement inévitable de gouttelettes d'eau, ce qui exige une séparation ultérieure du gaz et des gouttelettes. Le même problème se pose, et même d'une façon plus critique encore, dans les appareils agissant par mélange de gaz et d'eau, notamment par pulvérisation d'eau dans un trajet suivi par le gaz. Dans ce cas également, des moyens assurant la séparation du gaz et des gouttelettes d'eau entraînées sont nécessaires. Enfin, il est également connu de réaliser des appareils agissant par contact du gaz avec une surface mouillée. Dans un tel cas, les particules solides en suspension dans le gaz sont mouillées et retenues lors du contact de ce gaz avec la surface mouillée. Ces appareils évitent en grande partie un entraînement de gouttelettes d'eau et ainsi la nécessité de prévoir en aval du laveur des moyens de séparation comme précédemment. Toutefois, un inconvénient réside dans la faible efficacité alors obtenue. Pour le traitement d'épuration de volumes de gaz relativement importants, il est ainsi nécessaire de prévoir de grandes surfaces mouillées de contact avec le gaz, de sorte que l'encombrement de ces appareils est important.

On a cherché à remédier à cet inconvénient en utilisant, comme surfaces mouillées, des gouttières de ruissellement inclinées sur la verticale, mais dans ce cas encore l'efficacité d'épuration paraît insuffisante.

Le but de l'invention est d'apporter des perfectionnements aux appareils de ce dernier type, notamment en vue d'augmenter leur efficacité, ce qui permet de réduire leur encombrement pour le traitement de volumes de gaz donnés, sans que se pose le problème de la séparation ultérieure du gaz et des gouttelettes de liquide qui auraient pu être entraînées par celui-ci.

L'invention est matérialisée dans un laveur de gaz comportant une enceinte ainsi que des moyens dirigeant un flux de gaz sur une surface mouillée prévue dans cette enceinte, en vue de la rétention des particules solides en suspension dans ce gaz pour l'épuration de celui-ci, comprenant des gouttières de ruissellement d'eau ou d'un autre liquide, inclinées sur la verticale pour constituer cette surface mouillée et ouvertes dans la direction d'arrivée du gaz, caractérisé en ce que les gouttières sont disposées de manière à former au moins deux rangées de gouttières orientées transversalement à la direction d'écoulement du gaz, dans lesquelles les gouttières sont placées en quinconce, afin de constituer des chicanes interposées dans le trajet d'écoulement du gaz, obligeant celui-ci à progresser selon un trajet sinueux en subissant chaque fois une déviation sensiblement en contact avec la surface mouillée ménagée par les gouttières.

Suivant une disposition paraissant avantageuse, des déflecteurs sont montés dans le trajet d'écoulement du gaz en amont de la première rangée de gouttières, de manière à canaliser et à concentrer l'écoulement du gaz vers les gouttières de cette première rangée.

Suivant une autre particularité, les gouttières placées en quinconce des rangées successives ont une largeur telle ou sont conjuguées à des moyens formant déflecteurs disposés de façon telle que le gaz ne puisse pas traverser le jeu de rangées de gouttières selon un trajet rectiligne ou sensiblement rectiligne.

Lorsque le gaz chargé de particules en suspension subit une déviation sensiblement au contact de la surface mouillée formée par une gouttière dans laquelle il se produit un ruissellement d'eau, les particules solides viennent, par un effet d'inertie ou de centrifugation, en contact avec la nappe d'eau ruisselant dans la gouttière et sont ainsi mouillées et retenues par celle-ci. Par contre, le gaz ne peut pas entraîner avec lui de gouttelettes d'eau ou d'autres liquides, de sorte qu'une séparation ultérieure n'est pas nécessaire pour des vitesses d'air de quelques mètres/seconde. Pour des vitesses plus élevées, des gouttières parallèles aux gouttières de ruissellement sont aménagées pour recueillir ces gouttes et les conduire par gravité jusqu'au bac inférieur.

Les recherches effectuées ont montré que l'on obtient de cette manière, du fait de la conjugaison des changements de direction du flux d'air et du contact répété avec des nappes d'eau, un rendement particulièrement élevé d'épuration du gaz par fixation des particules en suspension, ce qui permet ainsi de traiter des volumes de gaz importants au moyen d'appareils de faible encombrement.

Etant donné par ailleurs que les gouttières sont inclinées sur la verticale, l'eau qui ruisselle dans ces gouttières n'a pas tendance à s'en décoller, même sous l'effet du flux de gaz dirigé sur elle, de sorte qu'on évite, comme indiqué ci-avant, un entraînement de gouttelettes d'eau par le gaz et les problèmes qui en résultent.

Bien que les gouttières puissent avoir des sections droites diverses, il semble que des résultats particulièrement satisfaisants soient obtenus avec des gouttières comprenant un fond plat et des rebords en principe perpendiculaires à ce fond, munis éventuellement de becs de concentration du flux d'air. Cette disposition permet d'obtenir en effet une surface mouillée maximum, avec une bonne retenue de l'eau.

Suivant une autre particularité de l'invention, il est prévu pour l'alimentation en eau ou autre liquide des diverses rangées de gouttières un bac supérieur à déversoir multiple, dans lequel une paroi latérale du bac a une forme présentant des décrochements de façon à relier successivement les bords supérieurs réglables individuellement en hauteur de toutes les gouttières des différentes rangées. On a, de cette manière, la certitude que les débits obtenus dans les différentes gouttières vont être parfaitement uniformes pour un niveau donné dans le bac au-dessus de l'extrémité supérieure de ces gouttières.

Suivant une autre particularité encore, les gouttières pénètrent à leur extrémité inférieure dans l'eau contenue dans un bac inférieur, ce qui évite ainsi tout contact du gaz avec un rideau d'eau qui ne serait pas en cours de ruissellement dans une gouttière, et par conséquent tout entraînement de gouttelettes.

De préférence, des moyens tels qu'un groupe moto-pompe ou un dispositif analogue sont prévus pour prélever l'eau au bac inférieur et pour la transférer dans le bac supérieur, afin d'assurer un ruissellement d'eau sensiblement en circuit fermé, d'une manière réduisant ainsi la consommation d'eau requise pour l'épuration du gaz.

On conçoit toutefois que, du fait de la fixation par l'eau des particules solides en suspension dans le gaz, il se produit dans le bac inférieur une accumulation de solides. Si la densité de ces solides est élevée, ils vont se déposer au fond du bac et ils pourront être évacués par un soutirage partiel de l'eau du bac inférieur, qui peut être renouvelée en partie dans de l'eau fraîche.

Si les solides en suspension flottent sur l'eau, une telle évacuation par soutirage par le fond du bac n'est plus possible. Suivant l'invention, il est prévu en combinaison avec ce bac inférieur du tuyau d'écoulement qui traverse le fond du bac et qui porte vers son extrémité supérieure un déflecteur présentant une légère conicité orientée vers ce tuyau d'écoulement, couvrant une partie importante de la section droite du bac et conjugué à une vanne rapide pouvant obturer ou ouvrir de façon sélective cet orifice supérieur du tuyau d'écoulement. Ce déflecteur se trouve à l'intérieur de l'eau du bac inférieur, à une certaine distance du niveau normal de cette eau. Des moyens tels qu'un vérin sont prévus pour la commande de la vanne rapide. Des recherches ont montré que l'ouverture de cette vanne rapide permettait, lors d'une accumulation de particules solides à la surface de l'eau du bac inférieur, une évacuation de ces particules par écrémage, par l'effet d'aspiration réalisé du fait de l'écoulement rapide dans le tuyau inférieur.

Suivant une autre particularité encore, afin d'éviter toute influence de la pression ou de la dépression exercée sur le gaz lors d'un écoulement par trop-plein à partir du bac inférieur, il est prévu en combinaison avec celui-ci un bac latéral communiquant avec le bac inférieur principal au-dessous de la surface normale de l'eau.

Bien qu'un laveur de gaz du type suivant l'invention puisse constituer un appareil indépendant, il peut être judicieusement combiné à certains appareils existants, notamment à un séchoir pour produits granuleux. Dans ce cas, le laveur de gaz peut être monté en aval de la colonne du séchoir si l'on considère le sens d'écoulement du gaz à travers les cases de cette colonne.

Une telle disposition permet au gaz, notamment à l'air, de traverser le laveur sans aucun changement de direction préalable, de sorte que le laveur n'exige qu'une perte de charge du gaz (pression ou dépression) de faible valeur, ce qui permet de réaliser une économie d'énergie par rapport à la plupart des systèmes d'épuration par lavage.

On sait que les cases de la colonne d'un séchoir sont alimentées en air chaud pour le séchage des produits granuleux et que, de ce fait, la température de ces produits granuleux va en augmentant de la partie supérieure vers la partie inférieure de la colonne. Il en est de même en conséquence de la température des gaz à la sortie des cases, c'est-à-dire lorsque ces gaz vont traverser le laveur. Ces gaz sont en outre chargés d'humidité et la condensation de la vapeur qu'ils renferment va élever progressivement la température de l'eau qui ruisselle dans les gouttières du laveur, sensiblement à la manière d'un échangeur d'eau à co-courant. Il est ainsi possible de récupérer, à partir de l'eau parvenant dans le bac inférieur, l'énergie calorifique qu'elle renferme, ce qui représente un avantage supplémentaire résultant de la combinaison du laveur et d'un séchoir.

Suivant un mode de réalisation possible, afin d'augmenter la récupération d'énergie calorifique, le fond de certaines au moins des gouttières est constitué par des tubes parcourus par un fluide d'échange thermique qui peut être liquide ou gazeux. Ces tubes peuvent être carrés, une paroi de chaque tube formant alors une partie du fond de la gouttière. Dans un tel cas, la partie mouillée qui forme chaque fois une paroi des tubes carrés fournit des possibilités d'échange thermique importantes, étant donné qu'on récupère à la fois la chaleur sensible des gaz venant en contact avec la surface mouillée lors de leur déviation et l'énergie calorifique potentielle ou chaleur latente qui résulte de la teneur en vapeur d'eau des gaz.

Un agencement de ce type est adapté notamment à l'obtention d'un échange thermique avec des fluides frigorifiques et à une intégration du système ainsi réalisé dans un circuit de pompe à chaleur.

Suivant une variante de réalisation, certaines au moins des gouttières sont agencées de manière à ménager par leur fond un passage tubulaire pour un fluide d'échange thermique. Dans un tel cas, on peut donner initialement aux gouttières une profondeur suffisante pour permettre le montage d'un fond intermédiaire de ruissellement du liquide, notamment d'eau, ménageant avec le fond proprement dit de la gouttière le passage tubulaire mentionné pour le fluide d'échange thermique, qui peut ici encore être gazeux ou liquide, selon le type de construction et les dimensions du passage tubulaire.

Le même type d'échange thermique que précédemment est alors obtenu.

Suivant un autre mode de réalisation encore, il est prévu un réseau ou faisceau de tubes d'échange thermique en aval du système de gouttières, ces tubes pouvant ici encore être parcourus par un fluide gazeux ou liquide.Avec un tel agencement, on récupère par échange avec ce fluide parcourant les tubes la chaleur sensiblement résiduaire des gaz qui n'a pas été abandonnée à l'eau de ruissellement des gouttières, ainsi que l'énergie calorifique résultant de la condensation de la vapeur d'eau résiduaire encore contenue dans les gaz.

Dans le cas d'un laveur de gaz combiné à un séchoir à grain, on peut par exemple faire passer dans ces tubes d'échange thermique de l'air neuf qui est ensuite dirigé vers le séchoir, par exemple en étant partagé pour alimenter les deux étapes d'un séchoir à surchauffe.

Le fluide réchauffé peut ainsi être de l'air neuf prélevé à l'extérieur du séchoir et injecté en amont du générateur d'air chaud de celui-ci, ou de l'eau ou de l'eau glycolée faisant partie d'un circuit fermé dans lequel les calories sont cédées à l'aspiration d'air neuf du séchoir par l'intermédiaire d'une batterie d'échange thermique, ou bien un fluide frigorigène au niveau d'un évaporateur de circuit de pompe à chaleur dont le condenseur se trouve à l'aspiration d'air neuf du séchoir, ou encore un fluide différent.

La description qui va suivre, faite en regard des dessins annexés, donnés à titre non limitatif, permettra de mieux comprendre l'invention. Bien que cette invention soit décrite ci-après dans son application à un laveur de gaz combiné à un séchoir, on comprendra qu'elle concerne également les laveurs de gaz agencés de la manière indiquée constituant des appareils indépendants ou combinés à d'autres types d'appareils de traitement.

La Fig. 1 est une vue en coupe verticale partielle d'un laveur de gaz adapté à la sortie d'une colonne de séchoir.

La Fig. 2 est une vue en coupe verticale prise dans une direction perpendiculaire à la précédente, par la ligne II-II en Fig. 1.

La Fig. 3 est une vue en coupe horizontale par la ligne III-III en Fig. 2.

Les Fig. 4 et 5 sont des vues de détail schématiques en coupe verticale et en plan respectivement du bac supérieur.

La Fig. 6 est une représentation schématique montrant une gouttière dont le fond est constitué par des tubes de passage d'un fluide.

La Fig. 7 est une vue analogue à la Fig. 6 montrant une gouttière à "double fond".

La Fig. 8 est une vue analogue se rapportant à une variante avec faisceau de tubes placés en aval des gouttières.

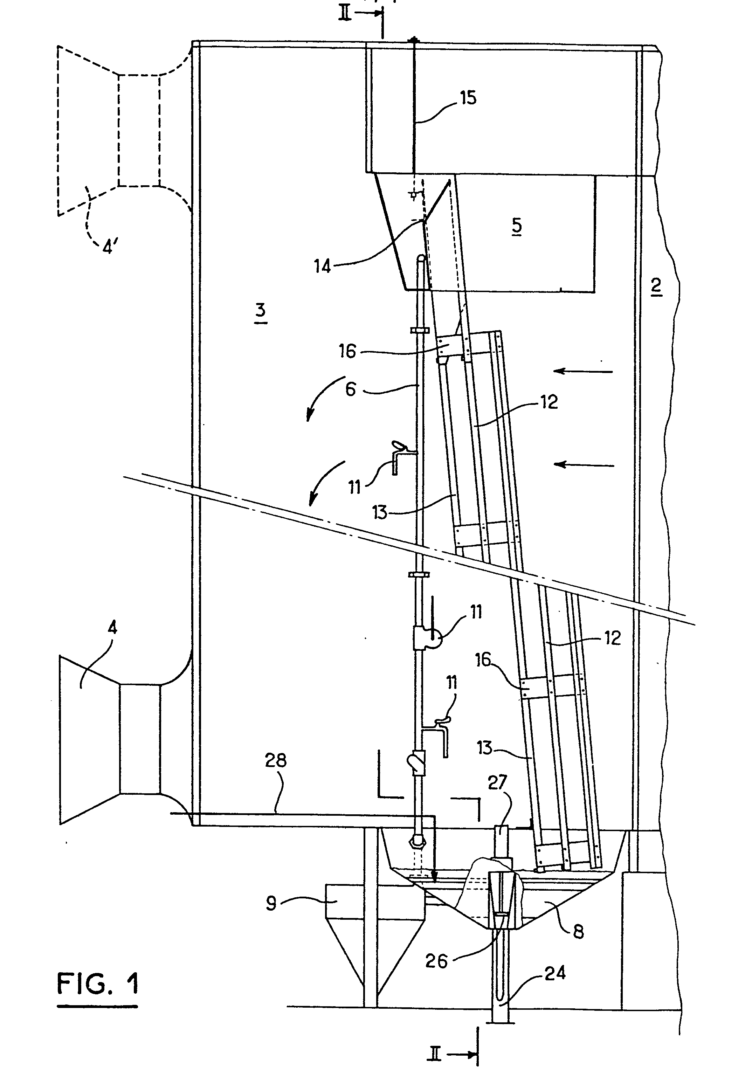

Sur les Fig. 1 à 5, le laveur de gaz désigné d'une façon générale par la référence 1 est monté en aval de la colonne d'un séchoir, indiquée schématiquement en 2 sur la Fig. 1, de telle sorte que les gaz traversant les cases de cette colonne 2 traversent ensuite sans changement de direction l'enceinte 3 du laveur de gaz, sous l'action d'un aspirateur 4 qui, dans le cas présent, est monté à la partie inférieure de cette enceinte 3, mais qui pourrait également être disposé à sa partie supérieure, comme indiqué en pointillé en 4'. Du fait de la présence de cet aspirateur, le laveur de gaz travaille ici en dépression, mais il va de soi qu'un fonctionnement en pression pourrait également être prévu.

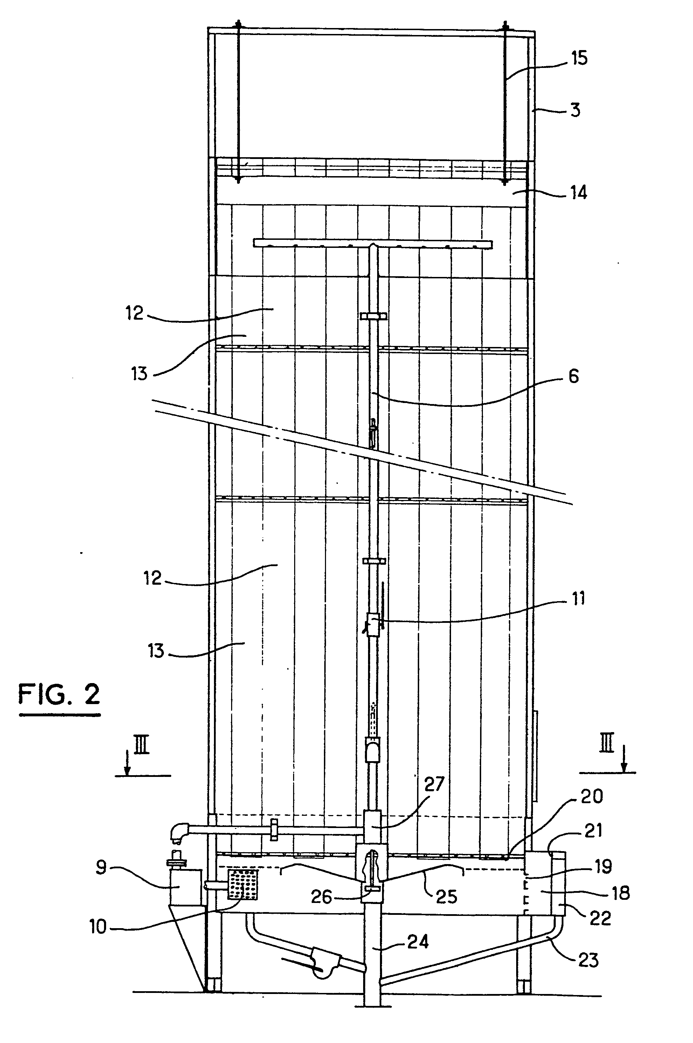

Il est prévu à la partie supérieure de l'enceinte 3 un bac 5 qui est alimenté en eau par un conduit 6 terminé à sa partie supérieure par une rampe 7 à partir d'un bac inférieur 8, par l'intermédiaire d'une moto-pompe 9 (Fig. 2) prélevant l'eau à ce bac inférieur 8 à travers une crépine 10. Des vannes et robinets 11 prévus dans le conduit 6 permettent une commande de l'alimentation en eau du bac supérieur 5.

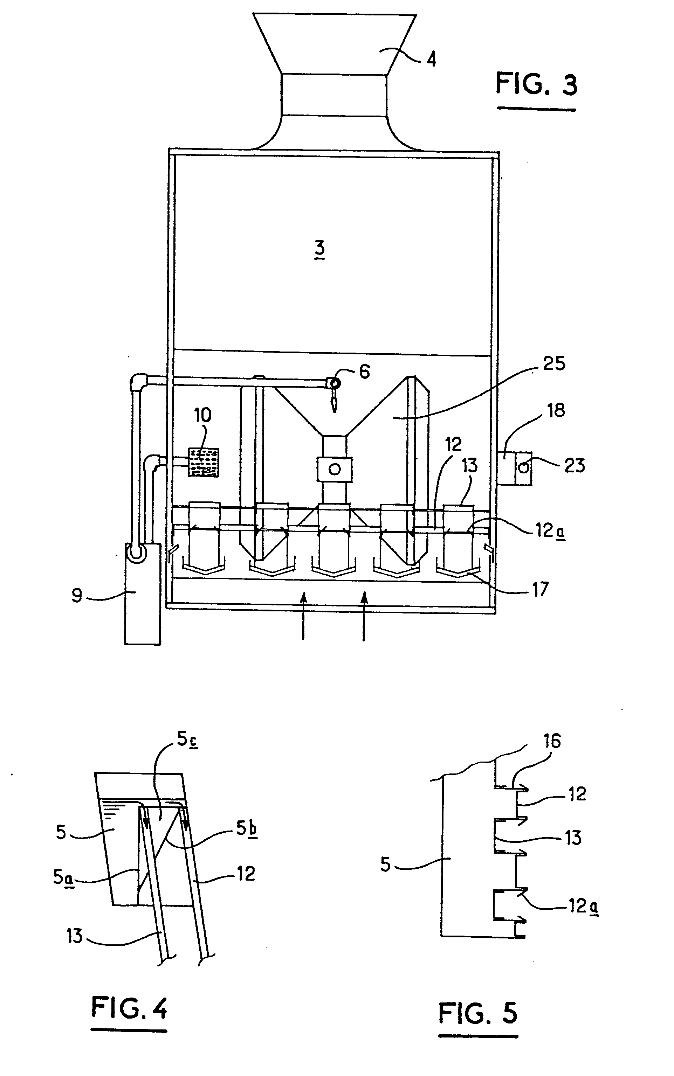

Suivant le mode de réalisation considéré, deux rangées de gouttières 12, 13 sont orientées transversalement à la direction d'écoulement des gaz. Ces gouttières sont inclinées sur la verticale et disposées en quinconce, et s'étendent depuis l'intérieur du bac supérieur 5, comme visible en particulier sur la Fig. 1, jusqu'à un point inférieur auquel lesdites gouttières pénètrent dans l'eau contenue dans le bac inférieur 8. On a montré schématiquement sur les Fig. 1 et 2 le mode de fixation des gouttières. On voit ainsi que les gouttières 13 sont supportées par une poutre 14 soutenue elle-même par des tirants 15 fixés à la partie supérieure de l'enceinte 3 du laveur. Les gouttières 12 sont supportées à partir de ces gouttières 13 par des flasques 16. La disposition en quinconce des gouttières est mieux visible sur les Fig. 3 et 5, sur lesquelles on voit également que ces gouttières ont une section droite présentant un fond plat muni de rebords sensiblement perpendiculaires à ce fond. Par ailleurs, les gouttières 12 sont munies de becs latéraux 12a qui concentrent le flux de gaz vers les gouttières 13.

Bien qu'on ait représenté sur les dessins deux rangées de gouttières 12, 13 en quinconce, on comprendra que, selon l'application qui en est faite, le laveur peut également comporter un nombre de rangées de gouttières supérieur à deux.

On voit sur la Fig. 3 qu'il est prévu, en avant de la première rangée de gouttières 12, des déflecteurs 17 qui dirigent et concentrent les gaz arrivant du séchoir vers les gouttières 12 de la première rangée, en donnant à ces gaz une certaine accélération. Sensiblement au niveau de cette rangée de gouttières 12, les gaz subissent une déviation pour passer entre les flasques 16 et se diriger vers lesgouttières 13 de la seconde rangée, par lesquelles ces gaz sont également déviés avant de rejoindre ensuite l'aspirateur 4.

Le bac supérieur 5 présente, pour l'alimentation régulière des gouttières 12, 13 des deux rangées en eau de ruissellement, une forme particulière à double déversoir, comme visible sur les Fig. 4 et 5. On voit sur ces Figures que ce bac supérieur 5 comporte une paroi verticale dirigée vers les gouttières qui est munie de décrochements, cette paroi comprenant une partie 5a dont l'extrémité supérieure rejoint le bord supérieur de chaque gouttière 13 et une partie 5b dont le bord supérieur rejoint le bord supérieur de chaque gouttière 12, ces parties 5a et 5b étant reliées entre elles par des parois latérales 5c. De cette manière, toutes les gouttières sont alimentées uniformément en eau à partir de ce bac supérieur 5.

Sur les Fig. 1 et 3, on a indiqué par des flèches le flux d'air chargé de particules solides en suspension et d'humidité, provenant des cases du séchoir combiné au laveur et parvenant à l'enceinte 3. On voit que ce flux d'air rencontre d'abord les déflecteurs 17, par lesquels il est canalisé en courants individuels dirigés vers la nappe d'eau ruisselant à l'intérieur de chaque gouttière 12. Cette gouttière 12, constituant un obstacle à l'écoulement de l'air, oblige celui-ci à changer brusquement de direction, sensiblement au contact de cette nappe d'eau. Sous l'effet de leur inertie, les particules solides en suspension poursuivent leur trajectoire et parviennent jusqu'à la nappe d'eau, par laquelle elles sont mouillées et fixées, pour être entraînées en direction du bas. L'air dévié par les gouttières 12 agissant à la manière de chicanes passe ensuite entre les flasques 16 et est dirigé par le passage ménagé chaque fois entre deux gouttières 12 voisines vers les gouttières 13, au droit desquelles un phénomène analogue à celui décrit précédemment se reproduit. On obtient ainsi une séparation efficace des particules solides par rapport à l'air dans lequel elles sont en suspension. Dans l'application particulière décrite ici, l'humidité de l'air subit en outre une condensation au contact de l'eau qui ruisselle dans les gouttières.

Du fait de l'inclinaison de ces gouttières sur la verticale, un décollement de la nappe d'eau en cours de ruissellement n'a pas tendance à se produire, même sous l'effet du courant l'air subissant une déviation au contact de cette nappe d'eau. On évite de cette manière, comme indiqué précédemment tout entraînement de gouttelettes pouvant exiger une séparation ultérieure. En outre, du fait de la pénétration des gouttières dans l'eau du bac inférieur 8, le gaz ne traverse pas de rideau d'eau pouvant être à l'origine d'un tel entraînement de gouttelettes.

On voit en particulier sur la Fig. 2 qu'il est
prévu, en combinaison avec le bac inférieur 8, un bac de
trop-plein latéral plus petit 18, qui communique avec le
bac principal 8 par des orifices ou passages 19 disposés
au-dessous du niveau normal de l'eau dans ce bac inférieur indiqué en 20. Ce bac à trop-plein 18 communique à
son tour par un passage supérieur 21 avec un puits
d'écoulement 22 prolongé par un conduit 23 rejoignant un
tuyau d'écoulement central de grand diamètre 24. Un
conduit 28 d'arrivée d'eau fraîche débouche en outre
dans le bac inférieur pour compenser l'évacuation de
l'eau et pour maintenir en conséquence de façon permanente, dans l'ensemble du laveur, une quantité d'eau en
circulation suffisante.

Comme indiqué précédemment, il se produit dans
le bac inférieur, au cours de l'utilisation, une accumulation de particules solides qui résulte de la séparation
de ces particules par rapport à l'air. Dans le cas d'un
laveur conjugué à un séchoir de produits granuleux, ces
particules sont assez légères pour flotter à la surface
de l'eau du bac inférieur.

Suivant l'invention, et comme montré sur les
dessins, le tuyau d'écoulement 24 traverse le fond du bac
inférieur 8 pour pénétrer dans celui-ci et il porte vers
son extrémité supérieure un déflecteur 25 de grande
largeur, dont la forme en plan est visible sur la Fig. 3.
Ce déflecteur se trouve au-dessous de la surface de l'eau
dans le bac inférieur et à une distance de cette surface de
quelques centimètres. Il présente en outre en élévation
une légère conicité en direction du tuyau d'écoulement
24. Une vanne rapide 26 est prévue à la partie supérieure
du tuyau d'écoulement 24 et peut être actionnée brusquement à l'aide d'un vérin indiqué schématiquement en 27.

Cette vanne 26 est normalement fermée. Quand la
quantité de particules solides séparées du gaz et accumulées dans le bac inférieur est suffisante pour former à
la surface de l'eau de ce bac inférieur une couche d'une
épaisseur rejoignant le déflecteur, on ouvre brusquement
la vanne rapide 26 au moyen du vérin 27. Il se produit alors par le tuyau 24 un écoulement rapide qui, du fait de la section droite importante de ce tuyau d'écoulement crée une aspiration au-dessus du déflecteur 25, en entraînant vers ce tuyau d'écoulement la plus grande partie des particules accumulées en surface, par une action d'écrémage. Ce nettoyage du bac inférieur par évacuation des particules peut donc avoir lieu sans interruption du fonctionnement du laveur et sans devoir vidanger le bac inférieur 8.

On voit qu'on dispose ainsi d'un laveur de gaz particulièrement efficace, qui en outre est capable de fonctionner de façon permanente et qui n'exige aucun entretien.

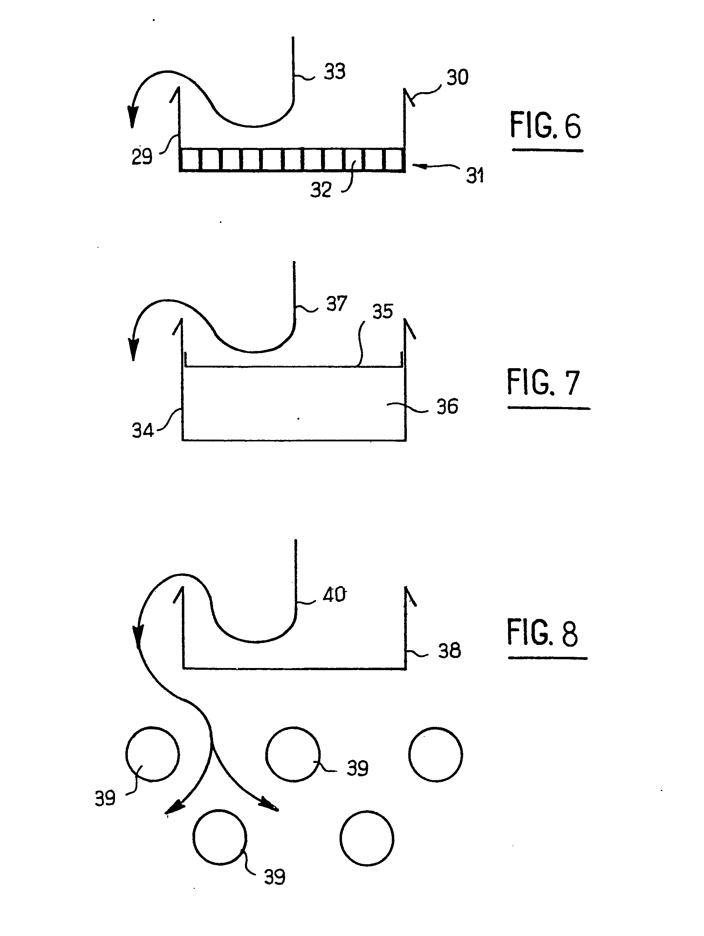

Sur la Fig. 6, on a désigné par la référence 29 une gouttière faisant partie de l'une des rangées de gouttières d'un laveur de gaz du type décrit ci-avant. Les parois latérales de la gouttière 29 sont munies de becs latéraux 30 qui sont destinés à concentrer le flux de gaz vers les gouttières d'une rangée placée en aval, comme décrit.

Suivant ce mode de réalisation, le fond 31 de la gouttière est constitué par une rangée de tubes carrés 32 dans lequel on peut faire circuler un fluide gazeux ou liquide d'échange thermique.

On a indiqué par une flèche en 33 le trajet d'écoulement des gaz provenant d'un séchoir à grain. Comme indiqué ci-avant, ces gaz dirigés vers la gouttière 29 subissent une déviation ou inversion en contact avec le fond de la gouttière, sur lequel ruisselle un liquide, notamment de l'eau. Ils abandonnent leur chaleur sensible au contact de cette eau en subissant un refroidissement et il se produit en outre une condensation de la vapeur d'eau dont ils sont chargés, ce qui fournit une quantité de chaleur additionnelle. On comprend aisément que ces deux sources d'énergie calorifique permettent, par l'échange thermique entre ces gaz et le fluide qui s'écoule dans les tubes carrés, une récupération de chaleur à travers la paroi des tubes formant le fond de la gouttière.

Dans le cas du mode de réalisation que montre la Fig. 7, on a donné à la gouttière 34, lors de sa formation, une profondeur accrue, et un fond intermédiaire 35 a été fixé sur la face intérieure de ses parois latérales. Ce fond intermédiaire ménage un passage tubulaire indiqué en 36 pour un fluide d'échange thermique gazeux ou liquide. La récupération de la chaleur contenue dans les gaz arrivant en contact avec le fond 35 comme indiqué par la flèche 37 est récupérée par échange thermique à travers ce fond 35, sur lequel ruisselle l'eau, et la récupération de la chaleur latente de condensation de la vapeur d'eau contenue dans les gaz s'effectue également en partie à travers ce fond 35.

Dans le cas du mode de réalisation que montre la Fig. 8, on voit qu'il est prévu en aval de la gouttière 38 un faisceau de tubes indiqués en 39, dans lesquels peut circuler ici encore un fluide d'échange thermique. Les gaz qui parviennent en contact avec le fond de la gouttière comme indiqué en 40 sont ici encore déviés et viennent ensuite baigner les tubes 39, comme indiqué schématiquement sur le dessin. Ils abandonnent à ces tubes, par échange thermique avec le fluide parcourant ceux-ci à travers la paroi desdits tubes, à la fois leur chaleur sensible résiduaire due à leur température et la chaleur latente de condensation de la vapeur d'eau qu'ils contiennent encore.

Des modifications peuvent être apportées aux modes de réalisation décrits dans le domaine des équivalences techniques. Ainsi il serait possible par exemple de combiner les dispositions faisant l'objet des Fig. 6 et 7 avec un faisceau de tubes montés en aval des gouttières comme visible sur la Fig. 8.

## REVENDICATIONS

1.- Laveur de gaz comportant une enceinte ainsi que des moyens dirigeant un flux de gaz sur une surface mouillée prévue dans cette enceinte, en vue de la rétention des particules solides en suspension dans ce gaz pour l'épuration de celui-ci, comprenant des gouttières de ruissellement d'eau ou d'un autre liquide, inclinées sur la verticale pour constituer cette surface mouillée et ouvertes dans la direction d'arrivée du gaz, caractérisé en ce que les gouttières (12, 13) sont disposées de manière à former au moins deux rangées de gouttières orientées transversalement à la direction d'écoulement du gaz, dans lesquelles les gouttières sont placées en quinconce, afin de constituer des chicanes interposées dans le trajet d'écoulement du gaz, obligeant celui-ci à progresser selon un trajet sinueux en subissant chaque fois une déviation sensiblement en contact avec la surface mouillée ménagée par les gouttières.

2.- Laveur de gaz suivant la revendication 1, caractérisé en ce que des déflecteurs (17) sont montés dans le trajet d'écoulement du gaz en amont de la première rangée de gouttières (12), de manière à canaliser et à concentrer l'écoulement du gaz vers les gouttières de cette première rangée.

3.- Laveur de gaz suivant la revendication 1 ou 2, caractérisé en ce que les gouttières (12, 13) placées en quinconce des rangées successives ont une largeur telle ou sont conjuguées à des moyens formant déflecteurs disposés de façon telle que le gaz ne puisse pas traverser le jeu de rangées de gouttières selon un trajet rectiligne ou sensiblement rectiligne.

4.- Laveur de gaz suivant l'une quelconque des revendications précédentes, caractérisé en ce que les gouttières (12, 13) présentent une section droite ménageant un fond plat et des rebords en principe perpendiculaires à ce fond plat, munis éventuellement de becs (12a) de concentration du flux d'air.

5.- Laveur de gaz suivant l'une quelconque des revendications précédentes, caractérisé en ce qu'il est prévu, pour l'alimentation en eau ou autre liquide des diverses rangées de gouttières (12, 13), un bac supérieur (5) à déversoir multiple dans lequel une paroi latérale du bac a une forme présentant des décrochements (5a, 5b, 5c) de façon à relier successivement les bords supérieurs de toutes les gouttières des différentes rangées.

6.- Laveur de gaz suivant l'une quelconque des revendications précédentes, caractérisé en ce qu'il comporte un bac récepteur inférieur (8), les extrémités inférieures des gouttières (12, 13) pénétrant dans l'eau ou l'autre liquide contenu dans ce bac inférieur.

7.- Laveur de gaz suivant les revendications 5 et 6, caractérisé en ce que des moyens tels qu'un groupe moto-pompe (9) sont prévus pour prélever l'eau au bac inférieur (8) et pour la transférer dans le bac supérieur (5) afin d'assurer un ruissellement de l'eau sensiblement en circuit fermé.

8.- Laveur de gaz suivant l'une quelconque des revendications 5 à 7, caractérisé en ce que des moyens (28) sont prévus pour assurer une alimentation du bac inférieur (8) en eau fraîche.

9.- Laveur de gaz suivant la revendication 7, caractérisé en ce qu'il est prévu, en combinaison avec le bac inférieur (8), un tuyau d'écoulement (24) de grande section portant vers son extrémité supérieure un déflecteur (25) présentant de préférence une légère conicité en direction de l'orifice du tuyau d'écoulement, une vanne rapide (26) associée à des moyens d'actionnement (27) étant combinée à cet orifice, de sorte que l'ouverture de cette vanne rapide provoque, par le tuyau d'écoulement un effet d'aspiration réalisant un écrémage en surface de l'eau du bac inférieur pour l'évacuation des particules solides flottant à la surface de l'eau.

10.- Laveur de gaz suivant la revendication 7, caractérisé en ce qu'il est prévu, en combinaison avec le bac inférieur (8), un bac de trop-plein (18) communiquant (en 19) avec ce bac inférieur au-dessous de la surface de l'eau et relié à un conduit d'écoulement du trop-plein (22, 23), afin d'assurer cet écoulement sans influence de la pression ou de la dépression provoquant l'écoulement du gaz.

11.- Laveur de gaz suivant l'une quelconque des revendications précédentes, caractérisé en ce qu'il est combiné à un séchoir de produits granuleux et en ce qu'il est monté directement à la sortie de la colonne de ce séchoir.

12.- Laveur de gaz suivant la revendication 11, caractérisé en ce que des moyens de récupération sont prévus pour récupérer l'énergie calorifique de l'eau de ruissellement du laveur, chauffée par contact avec le gaz provenant du séchoir et par condensation de l'humidité contenue dans ce gaz.

13.- Laveur de gaz suivant l'une quelconque des revendications 1 à 4, caractérisé en ce que ces gouttières sont combinées ou associées à des moyens d'acheminement d'un fluide d'échange thermique.

14.- Laveur de gaz suivant la revendication 13, caractérisé en ce que le fond (31) de certaines au moins des gouttières (29) est constitué par des tubes (32) parcourus par un fluide d'échange thermique liquide ou gazeux.

15.- Laveur de gaz suivant la revendication 14, caractérisé en ce que ces tubes (32) sont des tubes carrés dont une paroi forme une partie du fond de la gouttière (29).

16.- Laveur de gaz suivant la revendication 13, caractérisé en ce que certaines au moins des gouttières (34) sont agencées de manière à ménager en contact avec leur fond un passage tubulaire (36) pour un fluide d'échange thermique.

17.- Laveur de gaz suivant la revendication 16, caractérisé en ce que les gouttières (34) ont initialement une profondeur suffisante pour permettre le montage d'un fond intermédiaire (35) écarté du fond proprement dit de la gouttière pour ménager le passage tubulaire destiné au fluide d'échange thermique.

18.- Laveur de gaz suivant la revendication 13, ou l'une quelconque des revendications 14 à 17, caractérisé en ce qu'il est prévu, en aval du système de gouttières (38), un réseau ou faisceau de tubes d'échange thermique (39) parcourus par un fluide gazeux ou liquide.

19.- Laveur de gaz suivant la revendication 18, combiné à un séchoir à grain, caractérisé en ce que les tubes d'échange thermique sont parcourus par de l'air neuf qui est ensuite dirigé vers le séchoir.

FIG. 1

0028562

FIG. 2

0028562

FIG. 3

FIG. 4

FIG. 5

FIG. 6

FIG. 7

FIG. 8

**Office européen des brevets**

## RAPPORT DE RECHERCHE EUROPEENNE

Numéro de la demande

EP 80 40 1526

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| | AU - A - 466 194 (M. TERBOS) <br> * Figure; page 5, deuxième alinéa - page 6, troisième alinéa * <br><br> -- <br><br> US - A - 2 967 586 (F. JAKLITSCH) <br> * Figures 15-18; colonne 4, ligne 39 - colonne 5, ligne 6 * <br><br> -- | 1,5,6, 7 <br><br><br><br><br> 1,2,5, 6 | B 01 D 45/10 <br> 47/02 |
| A | GB - A - 1 096 255 (J.W.T. FERRETTI) | | **DOMAINES TECHNIQUES RECHERCHES (Int. Cl. ³)** |
| A | CH - A - 545 644 (KEBE) | | |
| A | US - A - 2 206 440 (G.H. WALKER) | | B 01 D 45/00 <br> 47/00 |
| A | FR - E - 56 505 (SOC. DES CON- DENSEURS DELAS) | | |
| A | GB - A - 358 487 (G.H.C. CORNER) | | |
| A | GB - A - 28 984/A.D. 1910 (A.H. LENNOX) | | |
| A | FR - A - 2 364 678 (P. GUTERMUTH) <br><br> ---- | | **CATEGORIE DES DOCUMENTS CITES** |
| | | | X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons <br><br> &: membre de la même famille, document correspondant |

Le présent rapport de recherche a été établi pour toutes les revendications

| Lieu de la recherche | Date d'achèvement de la recherche | Examinateur |
|---|---|---|
| La Haye | 16-01-1981 | BOGAERTS |

OEB Form 1503.1  06.78